# EUROPÄISCHE PATENTSCHRIFT

(11) **EP 0 417 408 B1**
(45) Veröffentlichungstag und Bekanntmachung des Hinweises auf die Patenterteilung: **01.09.1993**
(21) Anmeldenummer: 90111963.6
(22) Anmeldetag: 23.06.1990
(51) Int. Cl.: D21D 5/16, B07B 1/18

(54) **Verfahren zum Herstellen eines Siebkorbes sowie nach diesem Verfahren hergestellter Siebkorb**
Process for making a screen drum and screen drum made according to the process
Procédé pour la fabrication d'un tamis rond et tamis fabriqué selon ce procédé

(30) Priorität: 23.08.1989 DE 3927748
(43) Veröffentlichungstag der Anmeldung: 20.03.1991
(73) Patentinhaber: J.M. Voith GmbH, D-89522 Heidenheim (DE)
(72) Erfinder: Lange, Werner, D-7921 Nattheim (DE)
(74) Vertreter: Weitzel, Wolfgang, Dr.-Ing.

(56) Entgegenhaltungen:
- EP-A- 182 688

## Beschreibung

Die Erfindung betrifft ein Verfahren gemäß dem Oberbegriff des Patentanspruchs 1 sowie einen danach hergestellten Siebkorb. Ein solches Verfahren und ein solcher Siebkorb sind bekannt aus der DE-OS 33 27 422.

Bei diesem Verfahren ist das Befestigen der Siebstäbe an den Tragringen sehr zeitaufwendig und die Siebstäbe werden durch Schweißen an den Tragringen befestigt. Dabei treten mehrere Nachteile auf: Das Schweißen ist relativ umständlich und es entstehen dabei Spannungen im Material, die zu einem Verziehen des gesamten Siebkorbes führen können; die Befestigung ist nicht genügend sicher, da die Schweißnähte im Laufe der Zeit reißen können; es ist relativ schwierig, die Weite des Siebschlitzes zwischen zwei einander benachbarten Stäben genau einzustellen, insbesondere unter dem Gesichtspunkt, daß die Siebstäbe aus einem gezogenen Profil bestimmten Querschnitts hergestellt werden müssen, um den Anforderungen an die Technologie des Siebens oder Entwässerns gerecht werden zu können.

Es ist ferner aus der EP-A 0182688 ein Herstellungsverfahren für Siebkörbe für Faserstoffe bekanntgeworden, bei welchem fertige Tragringe Aussparungen aufweisen, in die als gezogene Profile hergestellte Siebstäbe von radial außen eingeschoben werden. Dabei weisen die Siebstäbe ebenfalls Aussparungen auf, die in radial innen, also in bezug auf die Aussparungen der Tragringe, radial einwärts gelegene Nuten eingreifen sollen. Zu dem Zweck werden an diesen Stellen die Siebstäbe geknickt, um deren Aussparungen aufzuweiten. Am fertigen Siebkorb umgreifen dann die Siebstäbe an diesen Stellen die Tragringe.

Es ist hierbei nachteilig, daß sowohl in den Tragringen als auch in den Siebstäben Aussparungen vorgesehen werden müssen, und daß zusätzlich die Tragringe noch mit einer Umfangsnut versehen werden müssen. Ferner ist auch die Umformung der Siebstäbe nachteilig, da hier erstens ein zusätzlicher Aufwand entsteht und zweitens auch Fehlermöglichkeiten durch die Umformung gegeben sind.

Der Erfindung liegt die Aufgabe zugrunde, ein Verfahren anzugeben, das die genannten Nachteile nicht aufweist, sowie Siebkörbe zu schaffen, die sich entsprechend günstiger herstellen lassen. Im einzelnen soll somit errreicht werden, daß die genannten Schweißspannungen vermieden werden, daß die Befestigung eine größere Sicherheit hat und daß sich die Siebschlitze genauer einstellen lassen.

Diese Aufgabe wird durch die kennzeichnende Merkmale des Hauptanspruches gelöst.

Die Erfindung ist anhand der Zeichnung näher erläutert. Darin ist im einzelnen folgendes dargestellt.
- Fig. 1: zeigt in perspektivischer Darstellung einen Ausschnitt aus einem Siebkorb.
- Fig. 2: zeigt einen mit Aussparungen versehenen Tragstab.
- Fig. 3: zeigt einen Siebstab, der zum Einlegen in eine Aussparung im Tragstab bestimmt ist.

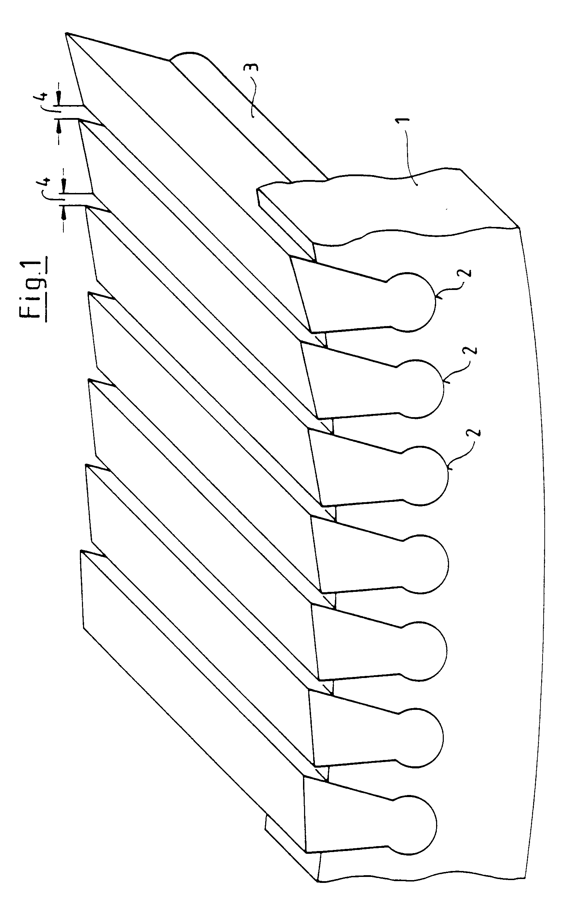

In Fig. 1 sieht man im einzelnen einen Abschnitt eines Ringes 1'. Der Ring 1' weist Aussparungen 2 auf, die mittels Drahterodierens hergestellt sind. Man erkennt ferner Siebstäbe 3, die in die einzelnen Aussparungen 2 derart eingeschoben sind, daß sie - in Draufsicht gesehen - senkrecht zum Ringabschnitt verlaufen und parallel zueinander liegen. Dabei verbleibt zwischen einander benachbarten Siebstäben 3 jeweils ein Abstand 4, der den Siebschlitz bildet.

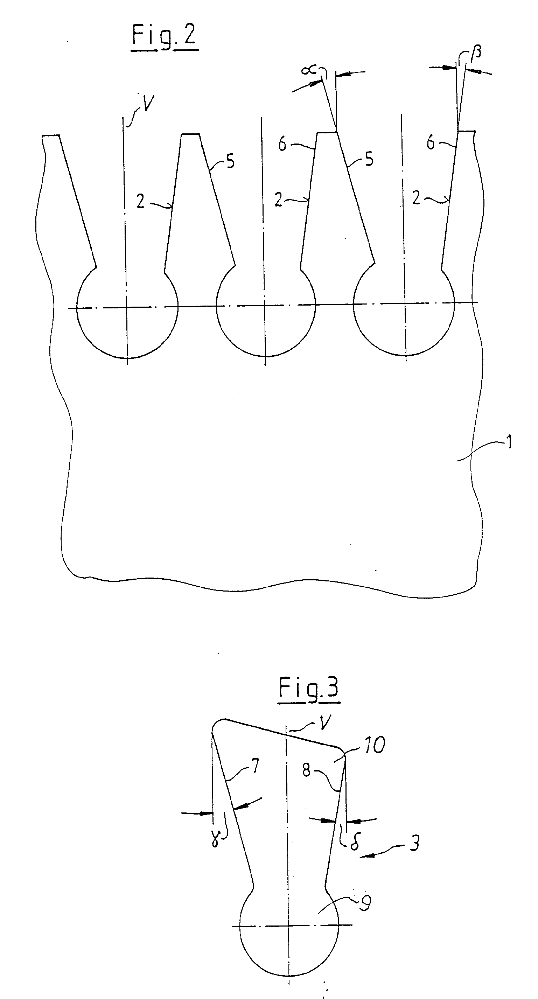

Der Ringabschnitt stellt einen Teil eines geschlossenen Ringes dar, der auf seinem gesamten inneren Umfang Stäbe 3 der anhand Fig. 3 näher erläuterten Art trägt.

Der in Fig. 2 gezeigte Abschnitt eines späteren, mit den Aussparungen 2' versehenen Ringes befindet sich hier noch in einem frühen Stadium seiner Herstellung, nämlich als gerader Stab, z.B. aus Flachstahl. Die Aussparungen 2 sind aber schon vorhanden. Dabei verlaufen die Seitenflächen 5 und 6 des Kopfteiles 10 unter bestimmten Winkeln - hier α und β - zur Vertikalen V. Zur rationelleren Herstellung werden mehrere Tragstäbe 1, bevor die Aussparungen eingearbeitet werden, parallel und berührend aneinandergelegt, so daß sie ein Paket bilden. Nunmehr kann man z.B. durch Erodieren an diesem gesamten Paket, d.h. bei einer Vielzahl von Tragstäben 1, in einem einzigen Arbeitsgang die zu einem Siebstab gehörigen Aussparungen 2 herstellen.

Der in Fig. 3 dargestellte Siebstab 3 ist beispielsweise im Strangpreß- oder im Ziehverfahren hergestellt. Er ist derart gestaltet, daß er jedenfalls ohne Schwierigkeiten in die Aussparungen 2 im Haltestab 1 einschiebbar ist, solange dieser noch nicht bis zu seiner endgültigen Form, d.h. zu einem Ring gerundet ist. Wie man sieht, ist der Fußteil 9 des Siebstabes 3 im Querschnitt etwa kreisförmig. Der Siebstab 3 weist mit seinem Kopfteil 10, mit dessen Ende er aus der Aussparung des Haltestabes 1 herausragt, im fertigen Zustand des Siebkorbes radial in das Siebkorbinnere hinein und ist jeweils so gestaltet, wie dies für die Technologie des Entwässerns oder Sortierens optimal ist.

In entsprechender Weise bilden auch hier die Seitenflächen 7, 8 des Kopfteiles einen bestimmten Neigungswinkel mit der Vertikalen V, hier die Winkel γ und δ.

Die Siebstäbe bilden zunächst im allgemeinen eine - ebene oder gebogene - Siebmatte, wobei sie "lose" in den Aussparungen der Haltestäbe 1 liegen. In dieser Art Siebmatte haben die Tragstäbe durch geeignete Mittel den richtigen endgültigen Abstand zueinander.

Die Erfindung beruht ja, wie oben ausgeführt, auf dem Einklemmen der Siebstäbe 3 in den Aussparungen 2 infolge des Rundens der Tragstäbe 1, bis diese schließlich die Gestalt geschlossener, kreisförmiger Ringe haben. Dabei werden die aneinanderliegenden Enden der Tragstäbe vorzugsweise miteinander verschweißt. Bei dem Runden nähern sich die Seitenflächen 5, 6 der Aussparungen 2 einander an, drücken damit auf die entsprechenden Seitenflächen 7, 8 der Siebstäbe 3 und klemmen die Siebstäbe 3 somit ein. Dabei muß natürlich darauf Bedacht genommen werden, daß das Einklemmen nicht im Übermaß geschieht, so daß es zu Materialzerstörungen kommt. Demgemäß müssen die genannten Winkel, d.h. α und β auf der einen Seite sowie γ und δ auf der anderen Seite entsprechend aufeinander abgestimmt werden. Dies bedeutet, daß der aus der Aussparung 2 hinausragende Kopfteil des einzelnen Siebstabes 3 im Zustand des Einlegens in die Aussparung 2 etwas schlanker sein muß, als der trichterförmige Teil der Aussparung 2. Wie stark die Unterschiede zwischen den genannten Winkeln sein werden, hängt jedoch von verschiedenen anderen Umständen ab, u.a. von der Materialwahl. Bei Wahl entsprechender Materialien der Siebstäbe 3 oder der Tragstäbe 1 können die Verhältnisse höchst unterschiedlich liegen. Im Extremfall, etwa bei der Wahl von Gummi oder gummiartigen Werkstoffen für die Siebstäbe 3 ist es sogar denkbar, daß die Winkel der Seitenflächen 5 und 6 gegen die Bezugsebene (hier die Vertikale) und die Winkel der Seitenflächen 7 und 8 gegen diese Bezugsebene (hier die Vertikale) gleich groß sind.

Außerdem ist es denkbar, daß man bei der Herstellung der Ringe nicht als Flachstähle ausgebildete, im wesentlichen gerade Tragstäbe benutzt, sondern schon von vorgerundeten Produkten ausgeht. Wichtig ist nur, daß die Haltestäbe vor dem Einlegen der Siebstäbe noch nicht fertig gerundet sind, d.h. noch keine - geschlossenen - Ringe bilden.

Man kann schließlich an beiden Stirnseiten des sozusagen vorgefertigten Siebkorbes noch Zentrierringe aufschrumpfen.

## Patentansprüche

1. Verfahren zum Herstellen rotationsymmetrischer Siebkörbe, die achsparallele Siebstäbe (3) mit dazwischen befindlichen, Siebschlitzen aufweisen sowie die Siebstäbe (3) tragenden, zur Siebkorbachse koaxialen Ringen (1'), wobei die Ringe (1') mit randoffenen Aussparungen (2') versehen, und die Stabfüße in den Aussparungen (2') gehalten werden, gekennzeichnet durch die folgenden Merkmale:
(a) die Aussparungen (2, 2') werden in geraden oder gebogenen Haltestäben (3) an derjenigen Kante der Tragstäbe (1) hergestellt, die am fertigen Siebkorb sich radial innen befindet;
(b) die Siebstäbe (3) werden in die Aussparungen (2) der Tragstäbe (1) eingeschoben oder eingelegt und
(c) schließlich werden die Tragstäbe (1) zu vollständigen Ringen (1') umgeformt, an deren Innenumfang sich die Aussparungen (2) befinden, um durch die dabei erzeugte Verengung der Aussparungen (2) die Siebstäbe (3) in diesen einzuklemmen.

2. Verfahren nach Anspruch 1, gekennzeichnet durch die folgenden Merkmale:
(a) als Tragstäbe (1) werden geradlinige Stäbe verwendet;
(b) die Tragstäbe (1) werden gebündelt, so daß sie unmittelbar nebeneinander liegen;
(c) die Aussparungen in den Tragstäben (1) werden mittels Erodieren erzeugt;
(d) die Siebstäbe werden in die Aussparungen (2) der Tragstäbe (1) eingeschoben oder eingelegt, so daß eine Siebmatte entsteht;
(e) die zusammenzuführenden Enden der Siebmatte werden angebogen;
(f) die Siebmatte wird gerundet, und es werden die Enden der Tragstäbe (1) miteinander verschweißt.

3. Verfahren nach Anspruch 1 oder 2 dadurch gekennzeichnet, daß nach dem Runden an den Stirnseiten des entstehenden Siebkorbes Zentrierringe aufgeschrumpft werden.

4. Siebkorb, hergestellt nach dem Verfahren gemäß Ansprüchen 1 bis 3, dadurch gekennzeichnet, daß die Aussparungen (2, 2') Seitenflächen (5, 6) aufweisen, die zu der Längsachse der Siebstäbe (3) parallel verlaufen, und daß die Siebstäbe (1) entsprechende Seitenflächen (7, 8) aufweisen, die den Seitenflächen (5) bzw. (6) der Aussparungen (2, 2') in eingesetztem Zustand zugewandt sind.

5. Siebkorb nach Anspruch 4, dadurch gekennz3eichnet, daß zur Verringerung der beim Runden auftretenden Klemmkräfte, der durch die Seitenflächen (7, 8) definierte Bereich des einzelnen Siebstabes (3) - im Querschnitt gesehen - schlanker ist, als der durch die Seitenflächen (5, 6) definierte Bereich der Aussparung (2).

## Claims

1. A process for producing rotationally symmetrical screen drums, which comprise axially parallel screen bars (3) having slots located therebetween and also rings (1'), which are coaxial to the screen drum axis and support the screen bars (3), whereby the rings (1') are provided with recesses (2') open at the edges, and the bases of the bars are retained in the recesses (2'),
**characterised by** the following features:
(a) the recesses (2, 2') are produced in straight or bent retention bars (3) at that edge of the supporting bars (1) which is located radially inwardly on the finished screen drum;
(b) the screen bars (3) are pushed or inserted into the recesses (2) of the supporting bars (1) and
(c) finally the supporting bars (1) are transformed into complete rings (1'), at the inner periphery of which the recesses (2) are located, so that the narrowing of the recesses (2) produced thereby clamps the screen bars (3) therein.

2. A process according to Claim 1,
**characterised** by the following features:
(a) rectilinear bars are used as the supporting bars (1);
(b) the supporting bars (1) are packed so that they lie directly next to one another;
(c) the recesses in the supporting bars (1) are produced by means of erosion;
(d) the screen bars are pushed or inserted into the recesses (2) of the supporting bars (1) so that a wire mat is produced;
(e) the ends of the wire mat to be brought together are bent;
(f) the wire mat is rounded, and the ends of the supporting bars (1) are welded together.

3. A process according to Claim 1 or 2,
**characterised in that** after rounding centring rings are shrunk onto the faces of the screen drum produced.

4. A screen drum produced according to the process specified in Claims 1 to 3,
**characterised in that** the recesses (2, 2') comprise lateral surfaces (5, 6) which extend parallel to the longitudinal axis of the screen bars (3),
**and in that** the screen bars (1) comprise corresponding lateral surfaces (7, 8), which are turned towards the lateral surfaces (5) and (6) respectively the recesses (2, 2') in the used condition.

5. A screen drum according to Claim 4,
**characterised in that** to reduce the clamping forces produced during rounding, the region, defined by the lateral surfaces (7, 8), of the individual screen bar (3) - seen in cross section - is narrower than the region of the recess (2) defined by the lateral surfaces (5, 6).

## Revendications

1. Procédé de fabrication de tambours de tamisage à symétrie de rotation, qui présentent des barreaux de tamis (3) à axes parallèles avec situées entre eux des fentes de tamis, ainsi que des anneaux (1') coaxiaux avec l'axe du tambour de tamisage et portant les barreaux de tamis (3), les anneaux (1') étant dotés d'évidements (2') ouverts sur les bords et dans lesquels les pieds des barreaux sont maintenus, **caractérisé par** les caractéristiques suivantes:
(a) les évidements (2, 2') sont réalisés dans les barreaux porteurs (1) droits ou cintrés, sur les bords du barreau porteur (1) qui se trouve radialement à l'intérieur du tambour de tamisage terminé;
(b) les barreaux de tamis (3) sont enfoncés ou insérés dans les évidements (2) du barreau porteur (1), et
(c) les barreaux porteurs (1) sont ensuite déformés pour donner des anneaux fermés (1') où les évidements (2) sont situés à la périphérie intérieure, pour serrer les barreaux de tamis (3) dans le rétrécissement ainsi formé des évidements (2).

2. Procédé selon la revendication 1, **caractérisé par** les caractéristiques suivantes:
(a) on utilise comme barreaux porteurs (1) des barreaux rectilignes;
(b) les barreaux porteurs (1) sont rassemblés en faisceaux de manière à être situés les uns immédiatement à côté des autres;
(c) les évidements des barreaux porteurs (1) sont réalisés par usinage;
(d) les barreaux de tamis (3) sont enfoncés dans les évidements (2) des barreaux porteurs (1) de manière à former un tapis de tamisage;
(e) le tapis de tamisage est cintré pour que ses extrémités convergent;
(f) le tapis de tamisage est arrondi et les extrémités des barreaux porteurs sont soudées les unes aux autres.

3. Procédé selon la revendication 1 ou 2, **caractérisé en ce qu**'après cintrage des anneaux de centrage sont sertis sur les extrémités frontales du tambour de tamisage obtenu.

4. Tambour de tamisage fabriqué suivant le procédé selon les revendications 1 à 3, **caractérisé en ce que** les évidements (2, 2') présentent des faces latérales (5, 6) s'étendant parallèlement à l'axe longitudinal des barreaux de tamis (3), et **en ce que** les barreaux de tamis (3) présentent des faces latérales (7,8) correspondantes qui lorsque les barreaux de tamis (3) sont placés sont tournées vers les faces latérales (5) et (6) des évidements (2, 2').

5. Tambour de tamisage selon la revendication 4, **caractérisé en ce que** pour réduire les forces de serrage apparaissant lors du cintrage, la zone définie dans chaque barreau de tamis (3) par ses faces latérales (7, 8) est plus étroite que la zone définie dans l'évidement (2) par ses faces latérales (5, 6).
